# EUROPEAN PATENT APPLICATION

(11) **EP 2 048 523 A1**
(43) Date of publication of application: **15.04.2009**
(21) Application number: 07791775.5
(22) Date of filing: 01.08.2007
(51) Int. Cl.: G02B 5/02, B32B 17/06, C09D 5/00, C09D 7/12, C09D 163/00, C09D 167/00, C09D 183/00, G03B 21/62

(54) **COATING SOLUTION FOR FORMING LIGHT DIFFUSION LAYER, AND LIGHT DIFFUSION PLATE**

(30) Priority: 02.08.2006 JP 2006210808
(71) Applicant: Asahi Glass Company, Limited, Chiyoda-ku Tokyo 100-8405 (JP)
(72) Inventor: INOKUMA, Hisao, Chiyoda-ku Tokyo 100-8405 (JP); HIGUCHI, Toshihiko, Chiyoda-ku Tokyo 100-8405 (JP)
(74) Representative: Müller-Boré & Partner Patentanwälte
(86) International application number: PCT/JP2007/065095
(87) International publication number: WO 2008/016088

(57) **Abstract**

A light diffusion plate in which the adhesiveness, particularly long term adhesiveness, between a glass substrate and a light diffusion layer is good; a coating solution for forming light diffusion layer to be employed for producing this light diffusion plate; and a transmission screen, a rear projection type projection TV and a backlight unit for liquid crystal display employing this light diffusion plate; are provided.

A coating solution for forming light diffusion layer, containing a binder, a light diffusion material and a compound containing a reactive silyl group and an epoxy group.

## Description

### TECHNICAL FIELD

The present invention relates to a transmission screen employed in e.g. a projection TV, a light diffusion plate provided mainly in such a transmission screen, and a coating solution for forming light diffusion layer employed for producing such a light diffusion plate.

### BACKGROUND ART

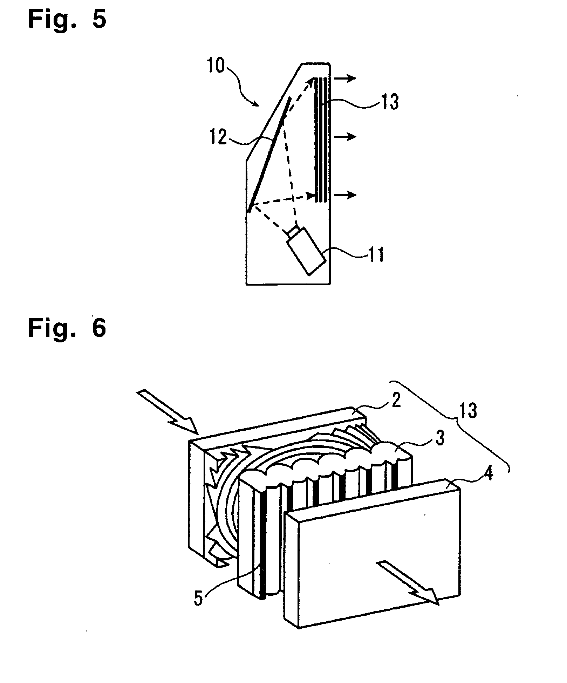

In recent years, a projection TV (PTV) particularly, a rear projection type (rear type) PTV10 (refer to Fig. 5) having a construction that projection light from an optical engine (projector) 11 is projected by a surface mirror 12 onto a rear side of a screen 13 to transmit an enlarged image, is attentioned as a system for realizing a large sized display for e.g. a home theater at low cost. Fig. 5 is an explanation view of a rear projection type projection TV.

Further, the transmission screen 13 is commonly constituted as shown in Fig. 6 by at least two lenses that are a Fresnel lens sheet 2 for converting projected light from the surface mirror into parallel light and outputting the parallel light, and a lenticular lens sheet 3 for expanding the substantially parallel light from the Fresnel lens sheet 2 in horizontal direction and outputting the light. Fig. 6 is a perspective view schematically showing a conventional transmission screen.

Further, as the case requires, a protector 4 having e.g. low reflectivity, anti-glare and fingerprint removal functions for protecting a lens and reducing reflection of external light, is disposed in a light-output side of the lenticular lens sheet 3 in a common construction. Here, in Fig. 6, 5 indicates a light-shielding layer, and arrows indicate the propagation direction of projection light from an optical engine (not shown).

Further, there is known a light diffusion plate having a light-diffusion material such as fine particles having a particle size of from about 1 to 30 µm for light diffusion. As such a light diffusion plate, a resin sheet made from a material kneaded with a light-diffusion material, or a substrate provided with a light diffusion layer containing a binder and porous particles, are known (refer to e.g. Patent Documents 1 and 2).
Patent Document 1: JP-A-2003-131325
Patent Document 2: JP-A-2006-119318

### DISCLOSURE OF THE INVENTION

### PROBLEMS TO BE SOLVED BY THE INVENTION

As such a light diffusion plate, a light diffusion plate formed by providing a light diffusion layer on a glass substrate is desired from the viewpoint of high flatness and high rigidity considering the trend toward large display size of PTV.

However, as a result of expensive study of the inventors, it has become apparent that when a light diffusion plate formed by providing a light diffusion layer on a glass substrate is employed, adhesiveness, particularly long term adhesiveness, between the glass substrate and the light diffusion layer becomes insufficient. This is considered to be because little amount of binder (binder resin) adhering to the glass and the presence of fine particles in the light diffusion layer reduce the contact area between the binder and the glass.

To cope with this problem, it is an object of the present invention to provide a light diffusion plate in which the adhesiveness, particularly long term adhesiveness, between a glass substrate and a light-diffusion layer is good; a coating solution for forming a light diffusion layer to be employed for producing such a light diffusion plate; and a transmission screen, a rear projection type projection TV and a backlight unit for liquid crystal display employing such a light diffusion plate.

### MEANS OF SOLVING THE PROBLEMS

The present inventors have conducted extensive studies to achieve the above objects, and as a result, they have discovered that by employing a specific coating solution for forming light diffusion layer containing a compound having a reactive silyl group and an epoxy group, it becomes possible to produce a light-diffusion plate in which the adhesiveness, particularly long term adhesiveness, between a glass substrate and a light diffusion layer is good, and they have completed the present invention.

Namely, the present invention provides the following items (1) to (11).
(1) A coating solution for forming light diffusion layer, containing a binder, a light diffusion material and a compound containing a reactive silyl group and an epoxy group.
(2) The coating solution for forming light diffusion layer according to the above (1), wherein the binder contains at least a polyester resin.
(3) The coating solution for forming light diffusion layer according to the above (1) or (2), wherein the content of the binder is from 20 to 60 mass%.
(4) The coating solution for forming light diffusion layer according to any one of the above (1) to (3), wherein the content of the light diffusion material is from 3 to 50 mass%.
(5) The coating solution for forming light diffusion layer according to any one of the above (1) to (4), wherein the content of the light diffusion material is from 10 to 200 parts by mass based on 100 parts by mass of the binder.
(6) The coating solution for forming light diffusion layer according to any one of the above (1) to (5), wherein the content of the compound having a reactive silyl group and an epoxy group is from 0.1 to 2.5 mass%.
(7) The coating solution for forming light diffusion layer according to any one of the above (1) to (6), wherein the content of the compound having a reactive silyl group and an epoxy group is from 1 to 20 mass% based on 100 mass% of the light diffusion material.
(8) A light diffusion plate comprising a glass substrate and a light diffusion layer formed on the glass substrate, which is obtainable by a method comprising a coating step of coating the glass substrate with a coating solution for forming light diffusion layer as defined in any one of the above (1) to (7) to form a coating film, and a forming step of drying and curing the coating film to form a light diffusion layer.
(9) A transmission screen provided with the light diffusion plate as defined in the above (8).
(10) A rear projection type projection TV employing the transmission screen as defined in the above (9).
(11) A backlight unit for liquid crystal display provided with the light diffusion plate as defined in the above (8).

### EFFECTS OF THE INVENTION

As described below, according to the present invention, it is possible to provide a light diffusion plate in which the adhesiveness, particularly long term adhesiveness, between a glass substrate and a light diffusion layer is good, and which is excellent in transparency; a coating solution for forming light diffusion layer to be employed for producing such a light diffusion plate; and a transmission screen and a backlight unit for liquid crystal display employing such a light diffusion plate.

Further, the light diffusion plate of the present invention is excellent in durability such as abrasion resistance or weather resistance, which is not susceptible to design change of lens, and has high generality. Accordingly, the transmission screen of the present invention employing this light diffusion plate can be suitably employed in a screen for a rear projection type PTV.

### BRIEF DESCRIPTION OF THE DRAWINGS

Fig. 1 is a side cross sectional view schematically showing an example of the light diffusion plate of the present invention.
Fig. 2 is a perspective view schematically showing an example of a suitable embodiment of the transmission screen of the present invention.
Fig. 3 is a perspective view schematically showing another example of a suitable embodiment of the transmission screen of the present invention.
Fig. 4 is an enlarged top view of the transmission screen shown in the schematic view of Fig. 2 in a state that the members are bonded together.
Fig. 5 is an explanation view of a rear projection type projection TV.
Fig. 6 is a perspective view schematically showing a conventional transmission screen.

### EXPLANATION OF NUMERALS

1, 1a, 1b: Light diffusion plate
2: Fresnel lens sheet
3: Lenticular lens sheet
4: Protector
5: Light-shielding layer
6: Anti-glare layer
7: Glass substrate
8: Diffraction layer
9: Adhesive layer
10: Projection TV (PTV)
11: Optical engine (projector)
12: Surface mirror
13: Screen
100: Glass substrate
100a, 100b: Glass substrate surface
110: Light diffusion layer

### BEST MODE FOR CARRYING OUT THE INVENTION

Now, the present invention will be described in detail.

The coating solution for forming light diffusion layer of the present invention contains a binder, a light diffusion material and a compound containing a reactive silyl group and an epoxy group. By coating the coating solution for forming light diffusion layer on a glass substrate, it is possible to form a light diffusion layer.

Next, the binder, the light diffusion material and the compound having a reactive silyl group and an epoxy group, used for the coating solution for forming the light diffusion layer of the present invention will be described in detail.

### BINDER

The binder is a component constituting a matrix of the light diffusion layer, that functions to retain in the light diffusion layer the light diffusion material to be described later.

In the present invention, the binder is a material for forming the light diffusion layer and functioning to bond the substrate and the light diffusion layer, and the binder is preferably transparent.

Further, in the present invention, the binder is a material enabling to form the light diffusion layer by coating, and is preferably a crosslinking coating material that is curable by e.g. heat or UV rays.

Such a binder may specifically, for example, be a resin material such as a polyester type resin, an acrylic type resin, a styrene type resin, a polycarbonate type resin, a polymethylpentene type resin, an acryl/styrene copolymer resin, an epoxy type resin, an olefin type resin or a silicone type resin; a crosslinked product obtainable from a hydrolyzate of a metal alkoxide; an inorganic material such as a low-melting point glass; or a mixture of these.

Among these, a binder containing at least a polyester resin is preferred for the reason that it can form a light diffusion layer having high durability such as water resistance and resistance against high temperature and high humidity by having a reaction with an isocyanate type curing agent to be described later. Here, the polyester resin is preferably polyester polyol having a OH group.

The refractive index of the binder is preferably from 1.42 to 1.66 when it is an organic material, and is preferably from 1.45 to 2.7 when it is an inorganic material.

Here, in the present invention, the binder is preferably selected so that the refractive index difference from the light diffusion material to be described later becomes within a desired range.

Further, the binder is preferably contained in the coating solution for forming light diffusion layer at a content of from 20 to 60 mass% for the reason that a desired film thickness can be obtained by one coating step and that a film having homogenous composition can be obtained. The content is more preferably from 20 to 50 mass%.

### LIGHT DIFFUSION MATERIAL

The light diffusion material is constituted by particles functioning to diffuse incident light to a predetermined direction in the light diffusion layer, and in the present invention, the material is not particularly limited so long as it is constituted by transparent fine particles showing little absorption in the visible light region, that are fine particles having a particle size of about a few microns.

The light diffusion material may, specifically for example, be a transparent inorganic oxide fine particles such as a silica or an alumina; inorganic fine particles such as glass beads; organic fine particles such as transparent polymer beads; or a mixture of these.

Among these, organic fine particles are preferred for the reason that fine particles having uniform particle size can be easily obtained.

As such organic fine particles, e.g. polymer beads are mentioned.

As such polymer beads, those made of an acrylic resin, a styrene resin or a silicone resin are mentioned. More specifically, from the viewpoint of excellent chemical resistance, polymer beads made of a crosslinking resin such as an acrylic (PMMA) resin or an MS (acryl/styrene copolymer) resin are preferred.

Further, the shape of the polymer beads is preferably a perfect sphere for the reason that they can be uniformly dispersed in the light diffusion layer.

In the present invention, the average particle size of the light diffusion material is preferably from 1 to 20 µm. When the average particle size is in this range, a film having refractive index of low wavelength dispersion and having high brightness dispersion in the plane can be easily obtained.

Further, in the present invention, the refractive index of the light diffusion material changes depending on the material, and is preferably from 1.42 to 1.66.

In a case to be described later where the light diffusion plate of the present invention uses a refractive index difference between the light diffusion material and the binder, it is preferred to employ a light diffusion material having a refractive index different from that of the binder.

Further, in a case to be described later where the light diffusion plate of the present invention uses irregularity of film surface to diffuse light, the refractive indices of the binder and the light diffusion material may be the same or different.

Further, in a case to be described later where the light diffusion plate of the present invention has a construction having two light diffusion layers provided on a glass substrate, a light diffusion layer (first layer) closer to the glass substrate preferably employs a light diffusion material having a refractive index different from that of the binder. This is because since a second layer is formed directly on the first layer, it is not possible to diffuse light by surface irregularities of the film, and it is necessary to use light diffusion property of fine particles present in the film to produce light diffusion. On the other hand, in a light diffusion layer (second layer) more distant from the glass substrate, the refractive indices of the binder and the light diffusion material may be the same or different.

In the present invention, the light diffusion material is preferably contained in the coating solution for forming light diffusion layer at a content of from 30 to 50 mass%. When the content is at least 3 mass%, the amount of light diffusion material becomes sufficient, and it is possible to obtain desired light diffusion, and when the content is at most 50 mass%, the relative amount of the binder becomes sufficient, and it is possible to obtain good adhesiveness between the glass substrate and light diffusion layer. The content is particularly preferably from 10 to 40 mass%.

Further, as compared with the above binder, the above light diffusion material is preferably contained in an amount of from 10 to 200 parts by mass based on 100 parts by mass of the binder for the reason that the adhesiveness between the glass substrate and the light diffusion layer and the diffusing property are both satisfied.

Here, in a case of inorganic light diffusion material constituted by inorganic oxide fine particles or organic fine particles, the light diffusion material is preferably contained in the coating solution for forming light diffusion layer at a content of from 3 to 70 mass%. Particularly, the content is preferably from more than 50 to 70 mass%. Further, as compared with the binder, the inorganic light diffusion material constituted by inorganic oxide fine particles or inorganic fine particles is preferably contained in an amount of from 10 or 500 parts by mass based on 100 parts by mass of the binder, for the reason that both the adhesiveness between glass substrate and light diffusion layer and diffusion property are satisfied, and further, the light diffusion layer is preferably contained in an amount of more than 200 to 500 parts by mass.

### COMPOUND HAVING REACTIVE SILYL GROUP AND EPOXY GROUP

The compound (hereinafter it may also be referred to as "reactive silyl group-containing epoxy compound") having a reactive silyl group and an epoxy group is a compound having at least one each of (1) a reactive silyl group that can be crosslinked by hydrolysis and (2) an epoxy group in the molecule.

Here, the (1) reactive silyl group that can be crosslinked by hydrolysis is a group such as silanol group or hydrolyzable silyl group that can undergo condensation reaction by e.g. moisture or curing catalyst, to promote polymerization by crosslinkage.

The reactive silyl group-containing epoxy compound having the above (1) and (2) is preferably one represented by the following formula (1).

R-SiXₐR¹₃₋ₐ, (1)

In the above formula (1), R represents an organic group having an epoxy group, R¹ represents a monovalent hydrocarbon group containing 1 to 20 carbon atoms that may have a substituent, X represents a hydrogen group or a hydrolyzable group, and "a" represents an integer of from 1 to 3. Further, when "a" is 2 or 3, a plurality of Xs may be the same or different. In the same manner, when "a" is 1, a plurality of R¹s may be the same or different.

Further, the monovalent hydrocarbon group R¹ containing 1 to 20 carbon atoms that may have a substituent, may, for example, be a monovalent aliphatic hydrocarbon group such as an alkyl group or vinyl group; a monovalent alicyclic hydrocarbon group such as cyclohexyl group; or a monovalent aromatic hydrocarbon group such as a phenyl group. Specifically, it is preferably, a methyl group, an ethyl group, a n-propyl group, a n-butyl group, a n-hexyl group, a cyclohexyl group or a phenyl group.

Further, when X is a hydrolyzable group, the hydrolyzable group may, for example, be a halogen atom, an alkoxy group, an acyloxy group, an amide group, an amino group, an aminoxy group, a ketoxymate group or a hydride group. Among these, the hydrolyzable group having carbon atom(s) preferably contains at most 6 carbon atoms, more preferably at most 4 carbon atoms. Specifically, it may, for example, be a methoxy group, an ethoxy group or a propoxy group.

Further, "a" is preferably 2 or 3.

The reactive silyl group-containing epoxy compound may be a compound having the above (1) reactive silyl group and (2) epoxy group. Specifically, it may, for example, be γ-glycidoxypropyl trimethoxysilane, γ-glycidoxypropyl methyldimethoxysilane, γ-glycidoxypropyl triethoxysilane or β-(3,4-epoxycyclohexyl)ethyltrimethoxysilane.

Further, the reactive silyl group-containing epoxy compound is preferably contained in a coating solution for forming light diffusion layer at a content of from 0.1 to 2.5 mass%, particularly preferably from 0.5 to 2 mass, for the reason that both diffusion property and adhesiveness can be satisfied. Further, as compared with the above light diffusion material, the reactive silyl group-containing epoxy compound is preferably contained in an amount of from 1 to 20 parts by mass, particularly preferably from 1 to 10 parts by mass based on 100 parts by mass of the light diffusion material for the reason that both the adhesiveness between glass substrate and light diffusion layer and diffusion property can be satisfied.

### SOLVENT

The coating solution for forming light diffusion layer of the present invention may contain a solvent as the case requires for improving coating property on a glass substrate.

The solvent may specifically, for example, be an alcohol such as methanol, ethanol, n-propanol, isopropanol, n-butanol, isobutanol, sec-butanol or tert-butanol; a polyvalent alcohol such as ethylene glycol; an ether such as ethyl cellosolve, methyl cellosolve, butyl cellosolve or propylene glycol methyl ether; a ketone such as methyl ethyl ketone, 2,4-pentadione or diacetone alcohol; or an ester such as ethyl lactate or methyl lactate.

The above solvent is preferably contained in a coating solution for forming light diffusion layer at a content of from 20 to 60 mass%, particularly preferably from 20 to 40 mass%.

### CURING AGENT

The coating solution for forming light diffusion layer of the present invention may contain a curing agent as the case requires for improving curability of the above binder.

The curing agent may specifically, for example, be an isocyanate type curing agent, an amine type curing agent, a imidazole type curing agent or an acid anhydride type curing agent.

Among these, an isocyanate type curing agent is preferred for the reason that it is transparent and reactive with polyester resins to form rigid urethane bond.

The curing agent is preferably contained in the coating solution for forming light diffusion layer at a content of at most 30 mass%, more preferably at most 20 mass%, particularly preferably at most 15 mass%. When the content of curing agent is at most 30 mass%, it does not deteriorate the property of diffusion plate, such being preferred.

### OTHER ADDITIVES

The coating solution for forming light diffusion layer of the present invention may contain various types of additives such as a dispersing agent for improving dispersion stability of the light diffusion material, a surfactant for improving wettability to glass substrate, a defoaming agent or a leveling agent as the case requires.

By employing such a coating solution for forming light diffusion layer of the present invention, it is possible to produce a light diffusion plate in which the adhesiveness, particularly long term adhesiveness, between glass substrate and light diffusion layer is good. This is considered to be because the coating solution for forming light diffusion layer contains the above reactive silyl group-containing epoxy compound. Specifically, it is considered to be because (1) the reactive silyl group that can be crosslinked by hydrolysis enables the solution to chemically bond to a glass to obtain an effect of strong adhesiveness, and (2) the epoxy group contained in the solution enables to obtain an effect of high crosslinking property by ring-opening polymerization of the epoxy group. These effects are not achievable by a compound having a methacryloyl group or an amino group. Further, the reactive silyl group-containing epoxy compound preferably has no amino group for the purpose of preventing yellowing of film.

The light diffusion plate of the present invention is a light diffusion plate comprising a glass substrate and a light diffusion layer formed on the glass substrate, which is a light diffusion plate obtainable by a process comprising a coating step of coating the glass substrate with the coating solution for forming light diffusion layer of the present invention to form a coating film; and a forming step of drying the coating film and curing the film to form a light diffusion layer.

Next, the coating step, the forming step and the light diffusion plate of the present invention obtainable by the process comprising these steps, will be described in detail.

### COATING STEP

The coating step is a step of coating a glass substrate with the coating solution for forming light diffusion layer of the present invention, to form a coating layer.

The glass substrate is not particularly limited. It may, for example, be e.g. a transparent glass plate made of any type of glass such as a colorless transparent soda lime silicate glass, an aluminosilicate glass, a borate glass, a lithium aluminosilicate glass, a silica glass, a borosilicate glass or a non-alkali glass.

Among these, from the viewpoint of employing the light diffusion plate of the present invention for a transmission screen, a soda lime silicate glass is preferably employed.

Further, the thickness of the glass substrate depends on e.g. the size of transmission screen employing the light diffusion plate of the present invention, and it is preferably from 1.5 to 4.5 mm.

In the present invention, the method for coating such a glass substrate with the coating solution for forming light diffusion layer of the present invention, is not particularly limited, and the method may, for example, be a roller coating, a hand coating, a brush coating, dipping, a spin coating, a dip coating, a screen printing, a curtain flow coating, a bar coating, a die coating, a gravure coating, a microgravure coating, a reverse coating, a roll coating, a flow coating, a spray coating or a dip coating.

Among these, the screen printing method is preferred for the reasons that coating of large area is easy and that a thick film can be obtained by a single coating step.

### FORMING STEP

The forming step is a step of drying the coating film formed by the coating step and curing it to form a light diffusion layer.

In the present invention, the method for drying and curing the coating film formed by the coating step, is not particularly limited, and the method may, for example, be a method of heating the glass substrate coated with the coating solution for forming light diffusion layer of the present invention by an oven, or a method of irradiating the glass substrate with UV rays.

In a case of drying and curing the coating film by heating, the heating is preferably carried out at a temperature that is not too high, and it is preferred to heat the coating film in the atmospheric air at a low temperature of from 80 to 200°C for 5 to 60 minutes.

By carrying out such coating step and drying step two cycles, it is possible to form two light diffusion layers on the glass substrate.

### LIGHT DIFFUSION PLATE

The light diffusion plate of the present invention is a light diffusion plate having a glass substrate and a light diffusion layer formed on the glass substrate, that is obtainable by the process comprising the coating step and the forming step.

Further, the light diffusion plate of the present invention preferably has two light diffusion layers formed on a glass substrate for the reason that more uniform light diffusion can be obtained by combining a plurality of types of diffusions.

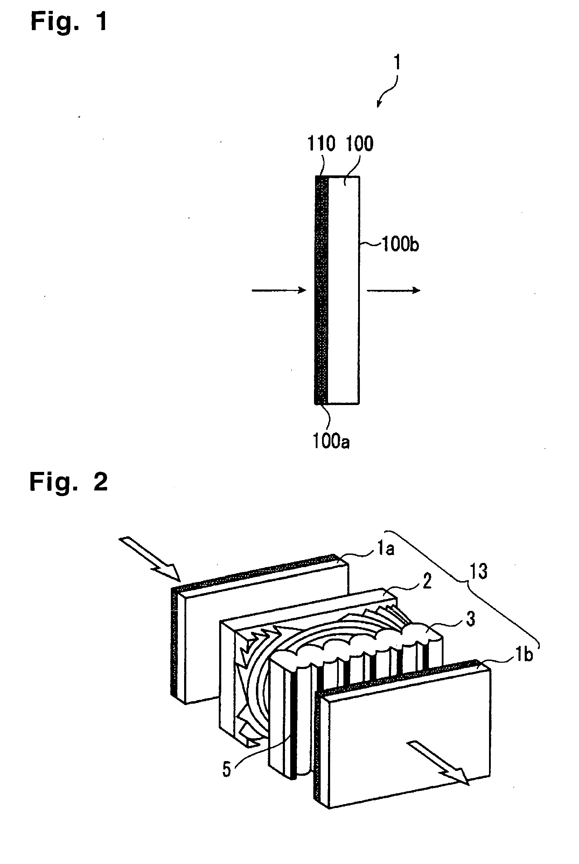

In the following, the light diffusion plate of the present invention will be specifically described with reference to drawings. Fig. 1 is a side cross sectional view schematically showing an example of the light diffusion plate of the present invention.

As shown in Fig. 1, a light diffusion plate 1 has a glass substrate 100 and a light diffusion layer 110 formed on a surface 100a of the glass substrate 100 and made of a binder and a light diffusion material dispersed in the binder. Here, the light diffusion layer 110 may be formed on one surface or each surface of the glass substrate 100.

Further, an arrow in Fig. 1 shows a light projection direction when the light diffusion plate 1 is employed in e.g. a transmission screen for PTV.

In the present invention, the light diffusion layer preferably has a haze value of at least 10% though the haze value requirement depends on the function. When the haze value is at least 10%, the light diffusion layer sufficiently diffuses light, and functions sufficiently as a light diffusion layer.

Further, in the present invention, the thickness of the light diffusion layer is preferably from 5 to 200 µm, preferably from 10 to 100 µm. When the thickness of the light diffusion layer is within this range, since light transmitted through the light diffusion layer is sufficiently diffused, it is possible to obtain sufficiently large view angle in vertical and horizontal directions, and since the thickness of the light diffusion layer becomes uniform, unevenness in displayed image tends to be lowered, and deterioration in image quality of displayed image tends to be lowered.

Here, in a case of forming two light diffusion layers, for the same reason, the total thickness of the first light diffusion layer and the second light diffusion layer is preferably from 5 to 200 µm, more preferably from 10 to 100 µm.

Further, in the present invention, the visible light transmittance (JIS K7361-1: year 1997) of the light diffusion plate 1 is preferably at least 85% from the viewpoint of utilizing light from a light source without loss.

Further, in the present invention, the light diffusion plate 1 may include another film or another substrate besides the glass substrate 100 and the light diffusion layer 110 within a range not departing from the object of the present invention.

For example, a low reflective layer for preventing projection of external light or a film subjected to anti-glare treatment (they are not shown) may be laminated on the surface 100b, or the surface 100b may be subjected to anti-glare treatment.

In the light diffusion plate of the present invention, since a light diffusion layer is formed by the coating solution for forming light diffusion layer of the present invention, adhesiveness, particularly long term adhesiveness, between a glass substrate and the light diffusion layer is good.

Further, the light diffusion plate of the present invention is excellent in durability such as abrasion resistance and weather resistance, it is not susceptible to lens design change, and it has high generality.

The light diffusion plate of the present invention having such adhesiveness can be obtained by the method comprising the coating step and the forming step.

The transmission screen of the present invention is a transmission screen provided with the light diffusion plate of the present invention.

Specific embodiment may, for example, be an embodiment in which a Fresnel lens, a lenticular lens and the light diffusion plate of the present invention are provided in this order so that the light diffusion layer of the light diffusion plate is disposed on the lenticular lens side; or an embodiment in which another light diffusion plate is further provided on an optical engine side of the Fresnel lens of the above embodiment.

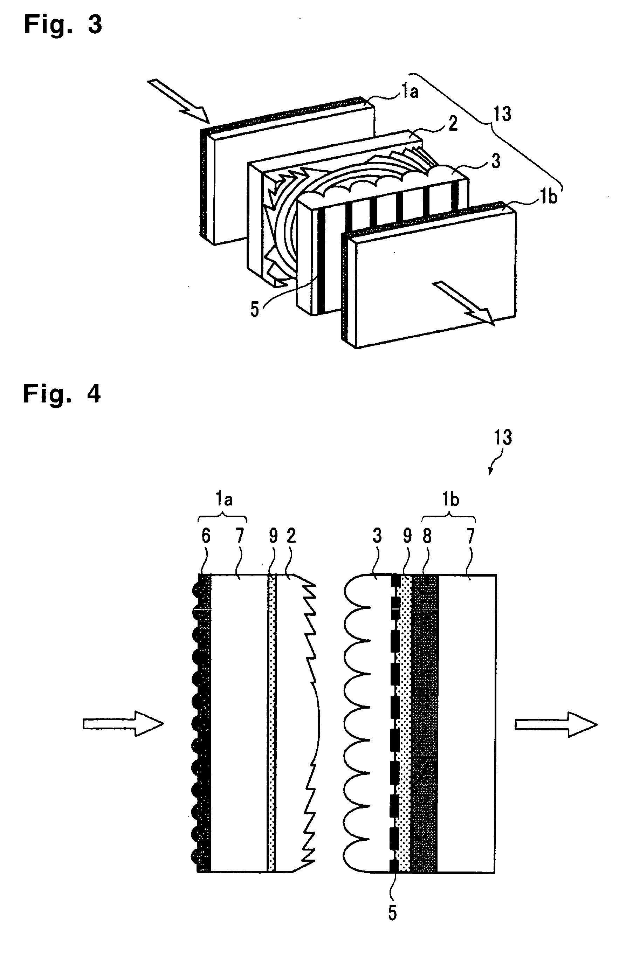

The transmission screen of the present invention will be specifically described below with reference to drawings. Fig. 2 is a perspective view schematically showing an example of preferred embodiment of the transmission screen of the present invention. Fig. 3 is a perspective view schematically showing another example of preferred embodiment of the transmission screen of the present invention. Fig. 4 is an enlarged top view of the transmission screen shown in the schematic view of Fig. 2 in a state that all components are bonded.

As shown in Figs. 2 and 3, in a transmission screen 13, a light diffusion plate 1a, a Fresnel lens sheet 2, a lenticular lens sheet 3 and a light diffusion plate 1b are arranged in this order so that the light diffusion layer side of the diffusion plate 1a is disposed in an optical engine (not shown) side and that the light diffusion layer side of the diffusion plate 1b is disposed on the lenticular lens 3 side. In each of these Figures, arrows show propagation direction of projection light from the optical engine.

Here, the light diffusion plate 1a is provided with an anti-glare layer formed to prevent a double image generated by projection light from a surface mirror that is subsequently reflected by the Fresnel lens sheet 2 surface and further reflected again by the surface mirror, and the light diffusion plate 1b is a diffusion plate for expanding light from the lenticular lens 3 mainly in vertical direction and outputting the light, and these diffusion plates are both included in the light diffusion plate of the present invention.

As shown in Fig. 4, in the transmission screen 13, the light diffusion plate 1a is bonded to the Fresnel lens 2 via an adhesive layer 9, and the light diffusion plate 1b is bonded to the lenticular lens 3 via an adhesive layer 9. Further, as described above, the light diffusion plate 1a is disposed so that the anti-glare layer 6 formed on the glass substrate 7 is on the optical engine (not shown) side, and the light diffusion plate 1b is disposed so that the diffusion layer 8 formed on the glass substrate 7 is on the lenticular lens 3 side. In Fig. 4, the arrows show propagation direction of projection light from the optical engine.

The Fresnel lens (Fresnel sheet) is a lens sheet for converting imaging light from the optical engine into substantially parallel light, and output it (towards an observer) to make entire screen uniformly bright.

The lenticular lens (lenticular sheet) is a lens sheet constituted by a group of cylindrical lenses each having a convex shape arranged in horizontal direction and for refracting the substantially parallel light from the Fresnel lens sheet in horizontal direction, and the lenticular lens refracts and diffuses the imaging light in left-right directions of the observer to thereby expand the view field angle (observation region) in horizontal direction and outputs the light.

Further, the above lenses are formed on light transmission surfaces of respective lens sheets, and the shapes of these lenses differ depending on the type of optical engine.

For example, in a case of transmission screen to be employed for a CRT type PTV, a lenticular lens 3 shown in Fig. 2 in which lenses are formed on both sides is employed in most cases, and in a case of transmission screen to be employed for high precision MD type PTV of e.g. a liquid crystal whose projection lens has small projection pupil size, a lenticular lens 3 shown in Fig. 3 provided with a lens only on one side is employed in most cases.

Further, on an output surface of the lenticular lens 3, a light-shield layer 5 of a stripe shape for absorbing external light is preferably formed in a no-light-collecting regions where the imaging light is not transmitted.

The transmission screen of the present invention can be suitably employed as a screen for rear projection type PTV. This is because the transmission screen employs a light diffusion plate excellent in durability such as abrasion resistance and weather resistance, that is not susceptible to design change of lens, and has high generality.

The rear projection type PTV of the present invention is a PTV employing the transmission screen of the present invention.

Specifically, as described in the PRIOR ART section with reference to Fig. 5, it is a rear projection type PTV in which projection light from an optical engine is projected via a surface mirror onto a rear side of a screen to thereby transmit an enlarged image, and the PTV employs the transmission screen of the present invention.

The backlight unit for liquid crystal display of the present invention is one provided with the light diffusion plate of the present invention.

Specifically, a preferred embodiment may, for example, be such that a backlight, the light diffusion plate of the present invention, a prism sheet and a film for improving brightness are disposed in this order.

### EXAMPLES

Now, the present invention will be described more specifically with reference to Examples, but the present invention is by no means limited to these Examples.

### EXAMPLE 1

### PREPARATION OF COATING SOLUTION A

50 g of polyester resin (Vylon 220, specific gravity 1.26, manufactured by Toyobo Co., Ltd.) and 50 g of a diluting solvent (G-004 solvent, manufactured by Teikoku Printing Inks Mfg., Co., Ltd.) are blended and stirred to prepare a polyester resin solution "a" containing 50 mass% of solid material, as a binder.

100 g of the polyester resin solution "a", 8.1 g of an isocyanate type curing agent (210 curing agent manufactured by Teikoku Printing Inks Mfg., Co., Ltd.) as a curing agent, 1.1 g of an epoxy type silane coupling agent (KBM-403, manufactured by Shin-Etsu Chemical Co., Ltd.) having glycidoxypropyl trimethoxysilane as a reactive silyl group-containing epoxy compound, 1 g of defoaming agent (SM257, manufactured by Teikoku Printing Inks Mfg., Co., Ltd.), 0.11 g of dibutyltin dilaurate (DBTDL) as a curing catalyst, and 17.5 g of acrylic resin fine particles [MBX-8 manufactured by Sekisui Plastics Co., Ltd. (complete spherical fine particles of crosslinked PMMA), specific gravity 1.2, average particle size 8 µm, refractive index 1.49] were blended and stirred to prepare a coating solution A.

### FABRICATION OF LIGHT DIFFUSION PLATE A

A surface of 30 cm square glass plate [no-tempered glass, thickness 3 mm, visible light transmission (JIS K7361-1: year 1997) 91%] was coated with the coating solution A by screen printing (mesh material: polyester, mesh number: 120 mesh) to form a coating film, and it was dried by an oven at 180°C for 10 minutes in the atmospheric air to cure the coating film to form a light diffusion layer, to thereby prepare a light diffusion plate A. The thickness of the light diffusion layer in the light diffusion plate A was 20 µm.

### EXAMPLE 2

A coating solution B was prepared in the same manner as Example 1 except that 41 g of MS resin fine particles [SMX-8M (PMMA/PS complete spherical fine particles) manufactured by Sekisui Plastics Co., Ltd., specific gravity 1.1, average particle size 8 µm, refractive index 1.56] were employed as light diffusion material instead of 17.5 g of acrylic resin fine particles; and a light diffusion plate B was prepared. The thickness of a light diffusion layer of the light diffusion plate B was 25 µm.

### EXAMPLE 3

A coating solution C was prepared in the same manner as Example 1 except that 40 g of MS resin fine particles [SMX-8V (PMMA/PS complete spherical fine particles) manufactured by Sekisui Plastics Co., Ltd., specific gravity 1.1, average particle size 8 µm, refractive index 1.55] were employed as light diffusion material instead of 17.5 g of acrylic resin fine particles; and a light diffusion plate C was prepared. The thickness of a light diffusion layer of the light diffusion plate C was 25 µm.

### EXAMPLE 4

A coating solution D was prepared in the same manner as Example 1 except that 14 g of acrylic resin fine particles [MBX-8 (crosslinked PMMA complete spherical fine particles) manufactured by Sekisui Plastics Co., Ltd., specific gravity 1.2, average particle size 8 µm, refractive index 1.49] and 20 g of MS resin fine particles [SMX-8M (PMMA/PS complete spherical fine particles), specific gravity 1.1, average particle size 8 µm, refractive index 1.56] were employed as light diffusion material instead of 17.5 g of acrylic resin fine particles; and a light diffusion plate D was prepared. The thickness of a light diffusion layer of the light diffusion plate D was 25 µm.

### EXAMPLE 5

A light diffusion plate E was prepared in the same manner as Example 4 except that forming of coating film by screen printing and forming of light diffusion layer by drying were repeated two cycles in Example 4. The thickness of a light diffusion layer of the light diffusion plate E, in terms of the total thickness of two layers, was 50 µm.

### EXAMPLE 6

A surface of 30 cm square glass plate [no-tempered glass, thickness 3 mm, visible light transmission (JIS K7361-1: year 1997) 91%] was coated with the solution A by screen printing (mesh material: polyester, mesh number: 120 mesh) to form a coating film, it was dried by an oven at 180°C for 10 minutes in the atmospheric air, and it was further coated with the solution B by screen printing (mesh material: polyester, mesh number: 120 mesh) to form a coating film, and it was dried at 180°C for 10 minutes in the atmospheric air by a drying machine to cure the coating film to form a light diffusion layer to thereby prepare a light diffusion plate F. The thickness of light diffusion layers of the light diffusion plate F, in terms of the total thickness of two layers, was 45 µm.

### EXAMPLE 7

A light diffusion plate G was prepared in the same manner as Example 6 except that the order of coatings of the coating solution A and the coating solution B was reversed in Example 6. The thickness of light diffusion layers of the light diffusion plate G, in terms of the total thickness of two layers, was 45 µm.

### EXAMPLE 8

A coating solution E was prepared in the same manner as Example 1 except that 14.2 g of styrene resin fine particles [SBX-8, manufactured by Sekisui Plastics Co., Ltd., specific gravity 1.06, average particle size 8 µm, refractive index 1.59] were employed as light diffusion material instead of 17.5 g of acrylic resin fine particles.

A light diffusion plate H was prepared in the same manner as Example 6 except that the coating solution E was employed instead of the coating solution A and the coating solution D was employed instead of the coating solution B in Example 6. The thickness of light diffusion layers of the light diffusion plate H, in terms of the total thickness of two layers, was 45 µm.

### EXAMPLE 9

A coating solution H was prepared in the same manner as Example 1 except that 222.2 g of alumina fine particles (CB-A05S, manufactured by Showa Denko K.K., specific gravity 3.98, average particle size 3 µm, refractive index 1.76) was employed as a light diffusion material instead of 17.5 g of acrylic resin fine particles, and that 3 g of an epoxy type silane coupling agent (KBM-403 manufactured by Shin-Etsu Chemical Co., Ltd.) containing glycidoxypropyl trimethoxysilane as a reactive silyl group-containing epoxy compound; and a light diffusion plate I was prepared. The thickness of a light diffusion layer of the light diffusion plate I was 25 µm.

### COMPARATIVE EXAMPLE 1

A coating solution F was prepared in the same manner as Example 1 except that a methacryl type silane coupling agent (KBM-503 manufactured by Shin-Etsu Chemical Co., Ltd.) containing no glycidoxypropyl trimethoxysilane was employed instead of the epoxy type silane coupling agent (KBM-403 manufactured by Shin-Etsu Chemical Co., Ltd.) in the solution A; and a light diffusion plate I was prepared. The thickness of a light diffusion layer of the light diffusion plate I was 20 µm.

### COMPARATIVE EXAMPLE 2

A coating solution G was prepared in the same manner as Example 1 except that an amino type silane coupling agent (KBM-603 manufactured by Shin-Etsu Chemical Co., Ltd.) containing no glycidoxypropyl trimethoxysilane was employed instead of the epoxy type silane coupling agent (KBM-403 manufactured by Shin-Etsu Chemical Co., Ltd.) in the solution A; and a light diffusion plate J was prepared. The thickness of a light diffusion layer of the light diffusion plate J was 20 µm.

Table 1 below shows the contents (mass%) of components in each solution prepared, the content of light diffusion material based on 100 parts by mass of binder in each coating solution, and the content (parts by mass) of reactive silyl group-containing epoxy compound based on 100 parts by mass of light diffusion material in each solution.

Further, each light diffusion plate prepared was evaluated by a method shown below. Table 2 shows the results.

### EVALUATION

### (1) Initial adhesiveness

Adhesiveness was evaluated by a matrix tape peel test similar to a cross-cut test according to JIS K5600-5-6: 1999.

On a surface (30 cm × 30 cm) of each light diffusion plate on which a light diffusion layer was formed, 100 pieces (10 × 10 matrix) of 1 mm square were formed, a cellophane tape (CT-15, manufactured by Nichiban Co., Ltd.) was completely adhered onto the matrix of squares, one end of the cellophane tape was instantly peeled off while the light diffusion plate was maintained horizontal, and the number of squares remained without completely peeled off was measured.

As a result, a sample from which zero square was peeled off was evaluated as "O", a sample from which 1 to 10 squares were peeled off was evaluated as "△", and a sample from which at least 11 squares were peeled off was evaluated as "×".

Here, since the light diffusion plate of Comparative Example 2 was yellowed and is apparently unusable as a light diffusion plate, it was not evaluated.

### (2) Water resistant adhesiveness

After each light diffusion plate was immersed in a hot water of 80°C for 3 hours, the matrix tape peel test was carried out in the same manner to evaluate adhesiveness.

Further, external appearance after the above test was checked by visual observation.

Here, since the light diffusion plate of Comparative Example 2 was yellowed and is apparently unusable as a light diffusion plate, it was not evaluated.

### (3) Constant temperature constant humidity adhesiveness

After each light diffusion plate was left in an atmosphere of 60°C 95% RH for 200 hours, the matrix tape peel test was carried out in the same manner to evaluate adhesiveness.

Further, external appearance after the above test was checked by visual observation.

Here, since the light diffusion plate of Comparative Example 2 was yellowed and is apparently unusable as a light diffusion plate, it was not evaluated.

### (4) Evaluation of diffusion property

By using a haze meter (HZ-2, manufactured by Suga Test Instruments Co., Ltd.), the haze value of each light diffusion plate was measured. In each of Examples 1 to 8, the haze value was at least 10% and diffusion property was good.

**TABLE 1**

| | Coating solution | | | | | | | |
|---|---|---|---|---|---|---|---|---|
| | A | B | C | D | E | F | G | H |
| Binder + solvent (polyester resin | | | | | | | | |
| solution "a" (solid component 50 | 78.2 | 66.0 | 66.5 | 69.2 | 80.3 | 78.2 | 78.2 | 29.9 |
| mass%)) | | | | | | | | |
| Curing agent (isocyanate type curing agent) | 6.3 | 5.4 | 5.4 | 5.6 | 6.5 | 6.3 | 6.3 | 2.4 |
| | | | | | | | | |
| Reactive silyl group-containing epoxy | 0.9 | 0.7 | 0.7 | 0.8 | 0.9 | 0.9 | 0.9 | 0.9 |
| compound (silane coupling agent) | | | | | | | | |
| Curing catalyst | 0.1 | 0.1 | 0.1 | 0.1 | 0.1 | 0.1 | 0.1 | 0.03 |
| Defoaming agent | 0.8 | 0.7 | 0.7 | 0.7 | 0.8 | 0.8 | 0.8 | 0.3 |
| Light diffusion material 1 (acrylic | 13.7 | | | 9.7 | | 13.7 | 13.7 | 66.4 |
| resin fine particles) | | | | | | | | |
| Light diffusion material 2 (MS resin | | 27.1 | | 13.9 | | | | |
| fine particles (n=1.56)) | | | | | | | | |
| Light diffusion material 3 (MS resin | | | 26.6 | | | | | |
| fine particles (n=1.55)) | | | | | | | | |
| Light diffusion material 4 (styrene | | | | | 11.4 | | | |
| resin fine particles) | | | | | | | | |
| Content (parts by mass) of light diffusion material based on 100 parts by mass of binder | 35.0 | 82.0 | 80.0 | 68.0 | 28.4 | 35.0 | 35.0 | 443.9 |
| Content (parts by mass) of reactive silyl group-containing epoxy compound based on 100 parts by mass of light diffusion material | 6.3 | 2.7 | 2.8 | 3.2 | 7.7 | 6.3 | 6.3 | 1.4 |

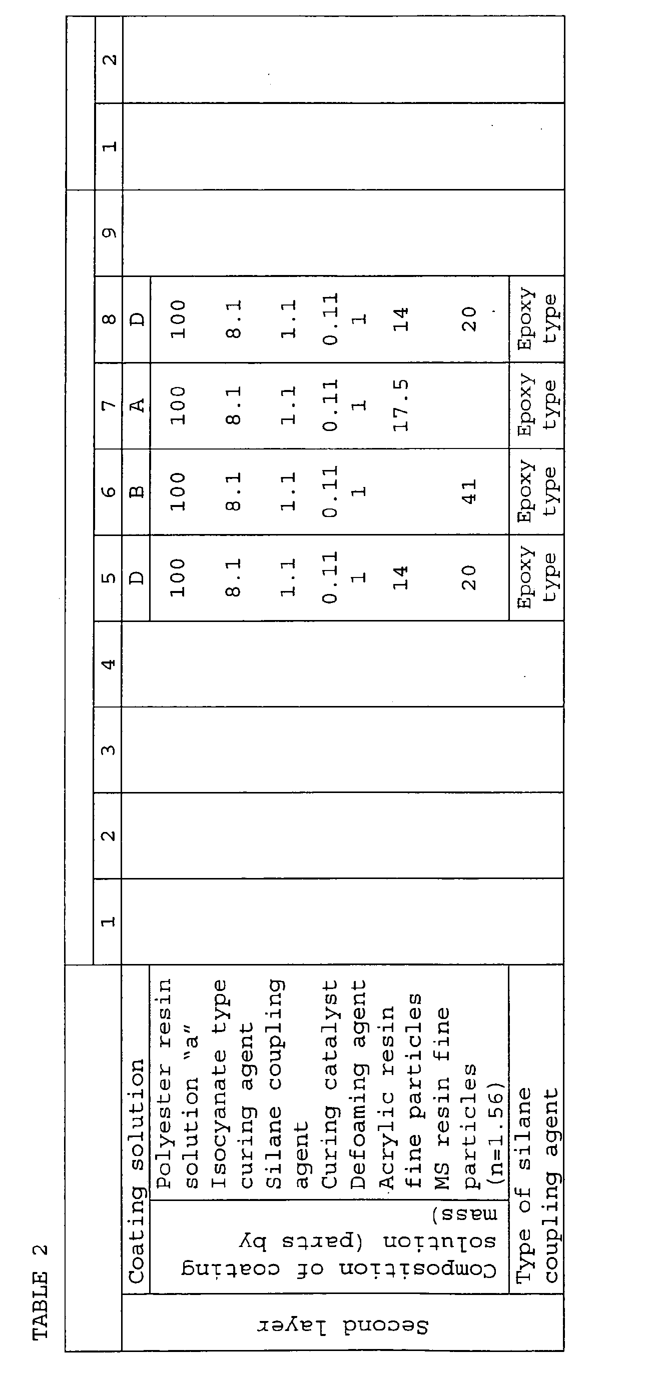

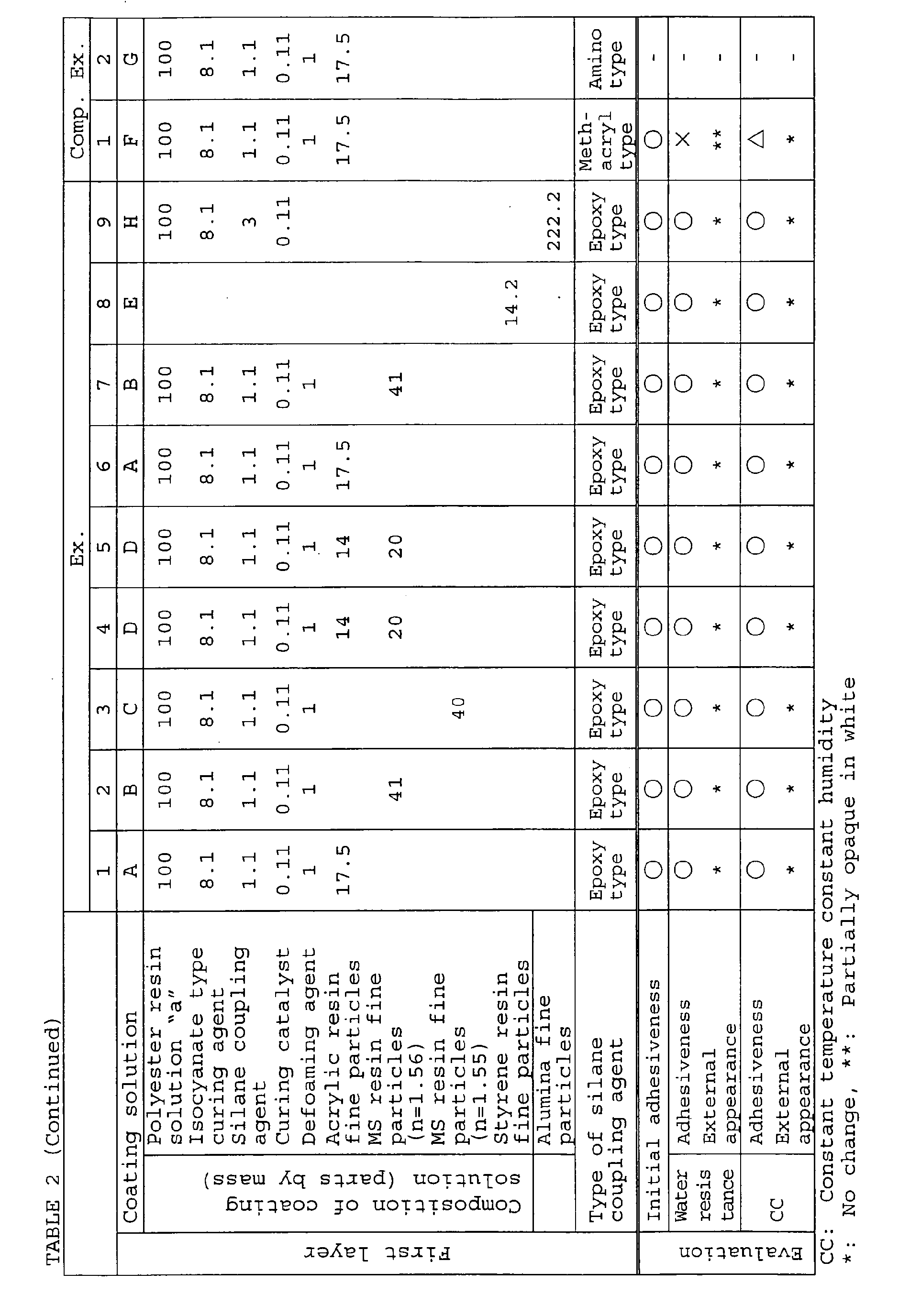

The results shown in Table 2 indicate that since the coating solution in each of Examples 1 to 8 contains an epoxy type silane coupling agent (reactive silyl group-containing epoxy compound), adhesiveness between glass substrate and light diffusion layer in a light diffusion plate obtained becomes good, and accordingly water resistant adhesiveness and constant temperature constant humidity adhesiveness become good and long term adhesiveness becomes good.

On the other hand, the results indicate that since the coating solution of each of Comparative Examples 1 and 2 contains a silane coupling agent having no epoxy group, a light diffusion plate obtained has poor adhesiveness, particularly in terms of water resistant adhesiveness and constant temperature constant humidity adhesiveness between glass substrate and light diffusion layer. Particularly, the results indicate that since the coating solution of Comparative Example 2 employs a silane coupling agent having an amino group, a light diffusion plate obtained is yellowed.

### INDUSTRIAL APPLICABILITY

According to the present invention, it is possible to easily form on a glass substrate a light diffusion layer having good adhesiveness with glass and excellent in transparency. A light diffusion plate provided with this light diffusion layer is excellent in durability such as abrasion resistance and weather resistance, its light diffusion performance can be easily adjustable, and accordingly, it is suitably employed as a diffusion plate for transmission screen, a backlight unit for liquid crystal display or a common illumination.

The entire disclosure of Japanese Patent Application No. 2006-210808 filed on August 2, 2006 including specification, claims, drawings and summary is incorporated herein by reference in its entirety.

## Claims

1. A coating solution for forming light diffusion layer, containing a binder, a light diffusion material and a compound containing a reactive silyl group and an epoxy group.

2. The coating solution for forming light diffusion layer according to Claim 1, wherein the binder contains at least a polyester type resin.

3. The coating solution for forming light diffusion layer according to Claim 1 or 2, wherein the content of the binder is from 20 to 60 mass%.

4. The coating solution for forming light diffusion layer according to any one of Claims 1 to 3, wherein the content of the light diffusion material is from 3 to 50 mass%.

5. The coating solution for forming light diffusion layer according to any one of Claims 1 to 4, wherein the content of the light diffusion material is from 10 to 200 parts by mass based on 100 parts by mass of the binder.

6. The coating solution for forming light diffusion layer according to any one of Claims 1 to 5, wherein the content of the compound having a reactive silyl group and an epoxy group is from 0.1 to 2.5 mass%.

7. The coating solution for forming light diffusion layer according to any one of Claims 1 to 6, wherein the content of the compound having a reactive silyl group and an epoxy group is from 1 to 20 parts by mass based on 100 parts by mass of the light diffusion material.

8. A light diffusion plate comprising a glass substrate and a light diffusion layer formed on the glass substrate, which is obtainable by a method comprising a coating step of coating the glass substrate with a coating solution for forming light diffusion layer as defined in any one of Claims 1 to 7 to form a coating film, and a forming step of drying and curing the coating film to form a light diffusion layer.

9. A transmission screen provided with the light diffusion plate as defined in Claim 8.

10. A rear projection type projection TV employing the transmission screen as defined in Claim 9.

11. A backlight unit for liquid crystal display provided with the light diffusion plate as defined in Claim 8.

12. The coating solution for forming light diffusion layer according to any one of Claims 1 to 3, wherein the content of the light diffusion material is from 3 to 70 mass%.

13. The coating solution for forming light diffusion layer according to any one of Claims 1 to 4 or Claim 12, wherein the content of the light diffusion material is from 10 to 500 parts by mass based on 100 parts by mass of the binder.
